# EUROPÄISCHE PATENTANMELDUNG

(11) **EP 1 107 206 A2**
(43) Veröffentlichungstag der Anmeldung: **13.06.2001**
(21) Anmeldenummer: 00115525.8
(22) Anmeldetag: 19.07.2000
(51) Int. Cl.: G08C 17/02, G01W 1/08, H04H 1/00

(54) **Verfahren und Einrichtungen zum Übertragen und Empfang von Wetterinformationen und Wettervorhersagen**

(30) Priorität: 10.09.1999 DE 19944901
(71) Anmelder: Deutsche Telekom AG, 53113 Bonn (DE)
(72) Erfinder: Andress, Ralph Petersen, 01705 Freital (DE); Huberty, Manfred, 54318 Mertesdorf (DE); Drews, Werner, 24960 Munkbrarup (DE); Drews, Lorenz, 24941 Flensburg (DE)

(57) **Zusammenfassung**

Verfahren und Einrichtungen zum Übertragen und Empfang von Wetterinformationen und Wettervorhersagen, insbesondere von regionalen, aktuellen Wetterinformationen und Wettervorhersagen unter Verwendung von LW-RDS, bestehend aus einer LW-Sendestelle, und einem Empfänger, einer Wetterstation (PWS), wobei Wetterdaten-Info, z.B. des KNMI (Koninklijk Nederlands Meterologisch Institut), über einen Datenübertragungsweg an die LW-Sendestelle mit Datenserver und LW-Sender weitergeleitet werden und die Daten in dem Datenserver zu Datenübertragungsprotokollen zusammengestellt und mit den Angaben der vorhandenen regionalen Wetterdaten und mit dem RDS-Protokoll, bestehend aus Zeitgrößen für übertragene Daten, mit Angaben über die Nachrichtenart, mit Angaben der Sendezeitpunkte und mit einer hochgenauen Uhrzeitangabe vom LW-Sender abgestrahlt und von einem Empfänger, einer PWS, selektiert abgerufen werden, wobei die Wetterstation aus einem LW Datenempfänger, einem Powermanagement und einem Display mit Wettersymbolen und Textzeilen sowie aus einem µ-Prozessor mit Bedienelementen besteht und über die Bedienelemente die regionalen Wetterinformationen und Wettervorhersagen ausgewählt abgefragt werden können.

Vorteilhaft ist für den Nutzer, daß die Wetterdaten bereits professionel bearbeitet als Zahlenwerte dem Nutzer zur Verfügung gestellt werden. Die zu übertragenen Daten sind als Zahlenwerte universell auch auf anderen digitalen Übertragungsplattformen, wie DAB, SWIFT etc. anwendbar.

## Beschreibung

Die Erfindung betrifft ein Verfahren und Einrichtungen zum Übertragen und Empfang von Wetterinformationen und Wettervorhersagen, insbesondere von regionalen, aktuellen Wetterinformationen und Wettervorhersagen unter Verwendung von LW-RDS.

Es ist allgemein bekannt, aktuelle Wetterdaten und Tendenzen der Wetterentwicklung mit elektronischen Wetterstationen zu erfassen . Diese Stationen arbeiten mit einem sehr hohen technischen Aufwand und werden zu einem hohen Preis den privaten Kunden angeboten. Die Ausstattung der Stationen mit zusätzlichen Meßfühlern kennzeichnet die verschiedenen Preisklassen.

Weiterhin sind Stationen bekannt, die mit den örtlich erfaßten Daten wie Temperatur, Luftdruck, Windgeschwindigkeit und Niederschlagsmenge, unterstützt von einer entsprechenden Software, Wettervorhersagen ermöglichen. Diese Vorhersagen sind nur so gut, wie die gewonnenen Meßwerte und das Know How der verarbeitenden Software. Eine Vorhersagequalität mit vergleichbar kommerziellen Wetterdaten bzw. Vorhersagen kann damit nicht erreicht werden.

Nach DE 44 02 058 C2 ist eine Wetterstation zum Empfang und zur Anzeige von Wetterfaxdaten (Langwellensender) bekannt, bei der über eine elektronische Schaltuhr über Zeitzeichen eine Synchronisierung erfolgt und über eingegebene Ein- und Ausschaltzeitpunkte der Empfang einer Wetterkarte ein- bzw. ausgeschaltet wird, wobei die empfangene Wetterkarte in einem digitalen Speicher zwischengespeichert und zur Anzeige gebracht werden kann. Diese Einrichtung ist für einen Wetterfaxdienst vorgesehen, der über LW-Sender dem Nutzer digitalisierte Karten, jedoch keine professionelle Bearbeitung bzw. Auswertung dieses Materials zur Verfügung stellt.

Aufgabe der Erfindung ist es, ein Verfahren und Einrichtungen zum Übertragen und Empfang von Wetterinformationen und Wettervorhersagen, insbesondere von regionalen, aktuellen Wetterinformationen und Wettervorhersagen unter Anwendung von LW-RDS zu schaffen, mit denen die Nachteile des Standes der Technik beseitigt werden und dem Nutzer bereits professionell überarbeitete und ausgewertete, regional zugeschnittene Daten zur Verfügung gestellt werden, wobei das System auch für andere Übertragungsplattformen geeignet sein soll und der Nutzer selbst die Form der Wiedergabe und damit die weitere Verwertung der empfangenen Daten bestimmen kann.

Ein Ausführungsbeispiel der Erfindung soll anhand der Zeichnungen näher erläutert werden. Die Zeichnungen zeigen in:
- Fig. 1:: ein Schema der LW-Sendeanlage mit Wetterdaten-Informant,
- Fig. 2:: ein Schema der Personel Weather Station (PWS).

Die Erfindung beschreibt ein Verfahren, das z. B. den Wetterinformationsdienst des KNMI (Koninklijk Nederlands Meteorologisch Institut) über Funk verwendet.. Dabei werden Wetterdaten für metereologische Regionen erzeugt und ausgestrahlt. Alle 15 Minuten werden aktuelle Wetterinformationen für 150 metereologische Regionen generiert. Außerdem werden Vorhersagen für einen Zeitraum von 0, 4 und 8 Stunden sowie für den nächsten Tag bereitgestellt. Zur Kommentierung der Meldungen und zu Informationszwecken kann eine Textmitteilung generiert werden.

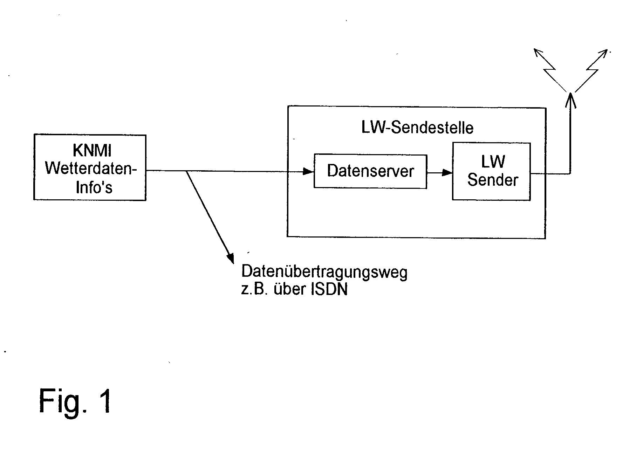

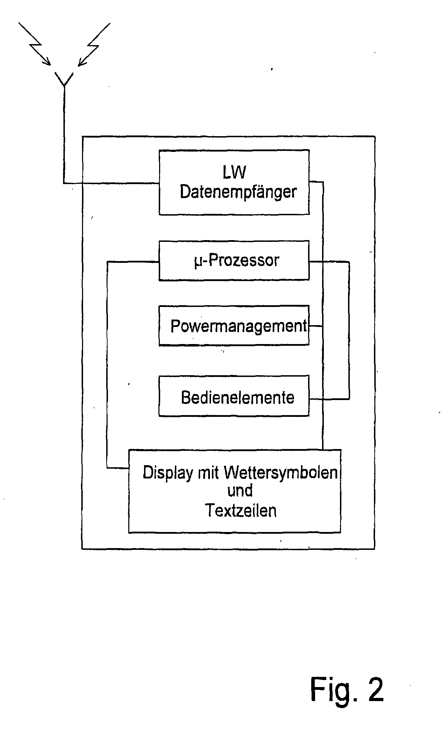

Nach Fig. 1 wird dieses Datenpaket über eine LW-Sendeanlage ausgestrahlt. Auf einer Personel Weather Station (PWS) nach Fig. 2, mit den Modulen Funkempfänger, µ-Prozessor und Display mit vorgefertigten Wettersymbolen und Textzeilenanzeige, können die Informationen zur Anzeige gebracht werden.

Die Verwendung von speziell auf den Dienst abgestimmten Datenübertragungsprotokollen auf dem Datenübertragungsweg zum Server ermöglicht kurze Übertragungszeiten. Die Datenpakete werden in der LW-Sendestelle durch den Datenserver so aufbereitet, daß die PWS nur dann aktiv geschaltet wird, wenn Informationen für die vom Nutzer selektierte

Region ausgestrahlt werden. In der Zwischenzeit wird die PWS in einen "sleep mode" versetzt. Damit werden hohe Batteriestandzeiten gewährleistet. In diesem Zeitschlitzverfahren wird außerdem zwischen dem immer wiederkehrenden konstanten Nachrichtenstrom der Wetterdaten und dem flexiblen Datenverkehr der Textnachrichten unterschieden. In einer speziell dafür ausgelegten RDS-Gruppe werden Steuerparameter übertragen, die den Empfänger über die Länge der Datenübertragung, über die Nachrichtenart und über den Sendezeitpunkt informieren.

Parallel zu den Wetter- und Textinformationen wird eine hochgenaue Uhrzeit übertragen, die in das RDS-Protokoll eingebettet ist. Über einen integrierten Temperatursensor in der PWS kann die Umgebungstemperatur gemessen und zusätzlich angezeigt werden.

## Patentansprüche

1. Verfahren und Einrichtungen zum Übertragen und Empfang von Wetterinformationen und Wettervorhersagen, insbesondere von regionalen, aktuellen Wetterinformationen und Wettervorhersagen unter Verwendung von LW-Sendestellen und einer Wetterstation PWS, dadurch gekennzeichnet, daß die Wetterdaten-Info, z.B. des KNMI, über einen Datenübertagungsweg an eine LW-Sendestelle mit Datenserver und LW-Sender weitergeleitet, die Daten in dem Datenserver zu Datenübertragungsprotokollen zusammengestellt und diese Datenpakete mit den Angaben der insgesamt vorhandenen regionalen Den sowie mit dem RDS-Protokoll, bestehend aus Zeitgrößen für übertragene Daten, mit Angaben über die Nachrichtenart, mit Angaben der Sendezeitpunkte und mit einer hochgenauen Zeitangabe (Uhrzeit) vom LW-Sender abgestrahlt wird und von einem Empfänger, einer Wetterstation (PWS-Personel Weather Station) selektiert abgerufen wird, wobei die Wetterstation aus einem LW Datenempfänger, einem Powermanagement und einem Display mit Wettersymbolen und Textzeilen sowie aus einem µ-Prozessor mit Bedienelementen besteht und über die Bedienelemente die regionalen Wetterinformationen und Wettervorhersagen ausgewählt abgefragt werden können.

2. Verfahren und Einrichtungen nach Anspruch 1, dadurch gekennzeichnet, daß die Datenpakete in der LW-Sendestelle durch den Datenserver so aufbereitet werden, daß die Wetterstation nur dann aktiv geschaltet wird, wenn Informationen für die vom Nutzer selektierte Region ausgestrahlt werden und in der Zwischenzeit die Wetterstation in einen "sleep mode" versetzt ist.

3. Verfahren nach Anspruch 1 und 2, dadurch gekennzeichnet, daß in dem Zeitschlitzverfahren immer wiederkehrende konstante Nachrichten (Wetterdaten) und der flexible Datenverkehr (Textnachrichten) unterschieden werden.

4. Verfahren und Einrichtungen nach Anspruch 1, dadurch gekennzeichnet, daß in der Wetterstation über integrierte Sensoren die Umgebungstemperatur, der Luftdruck und die Luftfeuchte gemessen und zusätzlich angezeigt werden.

5. Verfahren und Einrichtungen nach Ansprüchen 1 bis 4, dadurch gekennzeichnet, daß die übertragenen selektierten Daten sichtbar bzw. als Zahlen angezeigt werden und daß die empfangenen Zahlen als Ausgangs- und Leitgrößen zur Ansteuerung externer Geräte wie Alarmgeber, Drucker, Pager und für andere angeschlossene Anlagen, z.B. Klimaanlagen, die in Abhängigkeit von den empfangenen Wetterdaten arbeiten, verwendet werden.

6. Verfahren und Einrichtungen nach Ansprüchen 1 bis 5, dadurch gekennzeichnet, daß die Wetterinformationsübertragung bzw. regionale Wetterinformationsübertragung per Funk durch ein Empfangssystem mit "Sprach-Chip" wiedergegeben wird.

7. Verfahren und Einrichtungen nach Ansprüchen 1 bis 6, dadurch gekennzeichnet, daß für die Wetterinformationsübertragung per Funk auch der LW-RDS Sender Mainflingen 123,7 kHz sowie alle anderen Wetterdienst genutzt werden können.

8. Verfahren und Einrichtungen nach Anspruch 1, dadurch gekennzeichnet, daß Ausgabe und Weiterverarbeitung auch für alle weiteren im Datenkanal des LW-RDS Senders vorhandenen Dienste angewendet werden kann.
